(19) Europäisches Patentamt
European Patent Office
Office européen des brevets

(11) Publication number: **0 193 114 B1**

(12) **EUROPEAN PATENT SPECIFICATION**

(45) Date of publication of patent specification: **13.06.90**

(51) Int. Cl.[5]: **B 32 B 27/12,** C 08 L 71/00 // C08G65/40

(21) Application number: **86102212.7**

(22) Date of filing: **20.02.86**

(54) **Laminated product.**

(30) Priority: **28.02.85 JP 37462/85**

(43) Date of publication of application: **03.09.86 Bulletin 86/36**

(45) Publication of the grant of the patent: **13.06.90 Bulletin 90/24**

(84) Designated Contracting States: **BE CH DE FR GB IT LI NL SE**

(56) References cited:
**EP-A-0 121 257**
**GB-A-1 331 582**
**US-A-3 970 681**

(73) Proprietor: **IDEMITSU KOSAN COMPANY LIMITED**
**No. 1-1, 3-chome, Marunouchi Chiyoda-ku**
**Tokyo (JP)**

(72) Inventor: **Matsuo, Shigeru**
**1660, Kamiizumi Sodegaura-machi**
**Kimitsu-gun Chiba-ken (JP)**
Inventor: **Murakami, Tomoyoshi**
**1660, Kamiizumi Sodegaura-machi**
**Kimitsu-gun Chiba-ken (JP)**

(74) Representative: **Kraus, Walter, Dr. et al**
**Patentanwälte Kraus, Weisert & Partner**
**Thomas-Wimmer-Ring 15**
**D-8000 München 22 (DE)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 193 114 B1

**Description**

This invention relates to a novel laminated product, more particularly to a laminated product excellent in heat resistance, mechanical strength, solvent resistance, flame retardancy and molding workability.

As the material for electronic and electrical instruments or mechanical parts, laminated products obtained by impregnating and curing a thermosetting resin into a cloth or a mat comprising glass fibers or carbon fibers have been well known in the art.

However, in production of the above laminated products, it will take a long time for heat treatment for curing of a thermosetting resin, which is disadvantageous in industrial application. Also, in the manufacturing steps, a solvent is required to be used to bring about worsening of the working environment, and besides the step for recovery of the solvent employed is also required.

In order to cancel the problems of thermosetting resins as described above, it has been proposed to use a thermosetting resin as the constituent material of a laminated product in place of thermosetting resins.

GB—A—1 331 582 describes certain cyanoaryloxy polymers and products derived therefrom. EP—A—0 121 257 discloses novel crystalline polyarylnitrile polymers having excellent mechanical and thermal properties.

However, of thermoplastic resins, for example, a crosslinked polyethylene is inferior in heat resistance, a polytetrafluoroethylene is inferior in molding workability, and a polyphenyleneoxide is unsatisfactory in heat resistance and chemical resistance, thus possessing respective drawbacks, and therefore they were unsuitable as the constituent resin of a laminated product in the field of uses wherein heat resistance and solvent resistance are demanded.

The object of this invention is to cancel the above problems and provide a laminated product excellent in heat resistance, mechanical strength, solvent resistance, flame retardancy and molding workability.

The laminated product of this invention comprises a layer of polycyanoaryl ether containing 80 mole% or more of the recurring unit represented by the formula:

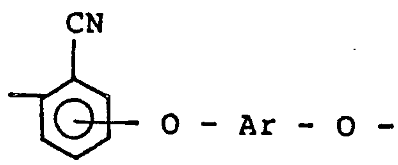

(I)

wherein Ar represents

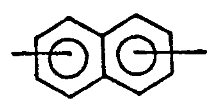,

and a layer of a fibrous reinforcing material laminated on one another.

First, the polycyanoaryl ether which is a component of the laminated product in this invention contains 80 mole% or more of the recurring unit represented by the above formula (I).

If the content of the recurring unit represented by the formula (I) is less than 80 mole%, the laminated product obtained will be lowered in heat resistance and mechanical strength.

The polycyanoaryl ether is one having a number-average molecular weight calculated on polystyrene within the range of from 20,000 to 90,000 as measured by high temperature gel permeation chromatography at 135°C in a solution of 70 mg/dl in N-methylpyrrolidone as the solvent. If the number-average molecular weight is less than 20,000, the polymer obtained lacks mechanical strength and heat resistance, while the number-average molecular weight over 90,000 will make it difficult to form a composite with the fibrous reinforcing material as hereinafter described. Preferably, the number average molecular weight is 25,000 to 70,000.

The polycyanoaryl ether may be prepared as follows.

For example, dihalogenbenzonitrile and an alkali metal salt of the divalent phenol of:

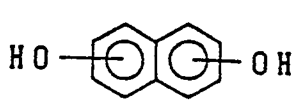

may be dissolved in a solvent such as N-methylpyrrolidone, sulforane, etc. to carry out the reaction at a temperature within the range of from 150 to 300°C, preferably from 160 to 250°C, followed by treatment with water or an alcohol. When a copolymer of polycyanoaryl ether is to be prepared, two or more kinds of divalent phenol may be employed.

The amount of the above polycyanoaryl ether formulated in preparation of the laminated product is 20 to 85% by weight. If the formulated amount is less than 20% by weight, the polycyanoaryl ether cannot be

sufficiently dispersed among the fibrous reinforcing materials, while an amount over 85% by weight will make heat resistance insufficient.

Next, the fibrous reinforcing material which is the other constituent of the laminated product may be any of those conventionally known, as exemplified by glass fibers, carbon fibers, aromatic polyamide fibers, etc. In carrying out lamination, chopped strand mat, continuous long fiber mat, woven fabric or knitted fabric of these fibrous reinforcing materials may be used, or alternatively a combination of these may also be used.

The amount of the fibrous reinforcing material formulated is 15 to 80% by weight, preferably 20 to 70% by weight, and the mechanical strength of the laminated product will be lowered if the formulated amount falls outside of this range.

Next, as the method for preparation of the laminated product, there may be employed:

(1) the method in which powder or pellets of a polycyanoaryl ether are sprayed uniformly on a mat or a fabric of the above fibrous reinforcing material and compression molded;

(2) the method in which a sheet is formed by extrusion molding or compression molding from the pellets of a polycyanoaryl ether, and this sheet of the polycyanoaryl ether and a mat or fabric of the above fibrous reinforcing material are laminated and compression molded;

(3) the method in which the above methods (1) and (2) are suitably combined, etc.;

but it is possible to employ any known method if it can laminate the polycyanoaryl ether and the fibrous reinforcing material.

In either case of (1) and (2), known additives such as antioxidants, thermal stabilizers, crystal nucleation agents, UV-ray absorbers, fillers, etc. may be added to the polycyanoaryl ether without any inconvenience.

Also, in the above methods (1) and (2), during preparation of sheets, pellets or powder of polycyanoaryl ether, it is convenient for improvement of heat resistance and mechanical strength to incorporate short fibers such as of carbon fibers, glass fibers and aromatic polyamide fibers, glass beads, mica, potassium titanate, talc, asbestos, etc. in an amount of 30% by weight or less.

The laminated product of this invention produced according to the method as described above may have a structure or thickness, which may be determined depending on uses and not particularly limited. For example, there may be included a laminated product having a three-layer structure in which said polycyanoaryl ether is laminated on the surface and the back of the inner layer comprising said fibrous reinforcing material, a laminated product of a multi-layer structure in which the layers of polycyanoaryl ether and the layers of fibrous reinforcing material are alternately laminated in a large number, or a two-layer laminated product as its minimum unit.

This invention is described in more detail by referring to the following Examples.

Example

A polycyanoaryl ether obtained from 2,6-dichlorobenzonitrile and 2,7-dihydroxynaphthalene was used for the prepareation of a laminated product. The polycyanoaryl ether had 100 mol% of the recurring unit of the following formula:

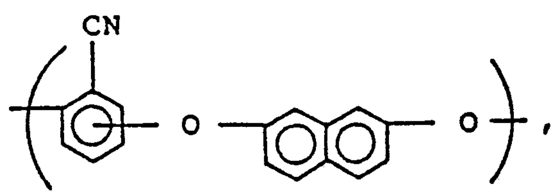

a number-average molecular weight of 35,000 and thermal properties of Tg of 215°C, Tm of 345°C and Td of 500°C (in air).

The powder of polycyanoaryl ether was dispersed uniformly in a flat plate mold of 50 mm × 50 mm, a carbon fiber mat (tradename: Toreca mat B0030®, produced by Toray K.K.) was covered over the powder, followed further by uniform dispersion of the polycyanoaryl ether powder on said mat. The formulated proportion of the polycyanoaryl ether was set at 80% by weight and that of the carbon fiber mat at 20% by weight.

Subsequently, the mold was closed and, under pressurization of 10.8 bar (10 $kg/cm^2$-G), press molding was carried out at 390°C for 5 minutes, and thereafter the mold was transferred into a cooling press, in which it was maintained at 240°C for 5 minutes to obtain a laminated product with a thickness of 1 mm.

For the laminated product obtained, mechanical properties of tensile strength, elongation, tensile modulus, flexural strength and flexural modulus and heat distortion temperature were measured.

Also, when the solvent resistance of the laminated product was examined, it was found to be insoluble in respective solvents of acetone, toluene, chloroform and methylene chloride.

Also, as for flame retardant property, when the laminated product was subjected to the flame of a lighter for 10 seconds and thereafter the flame was moved away, the fire was extinguished soon and no melt dripping was observed.

Comparative Example

A laminated product was prepared in the same manner as in the Example except for using as the resin component in the laminated product pellets of a polyether ether ketone (tradename: Victorex PEEK®, produced by Imperial Chemical Industry Co.) in place of the polycyanoaryl ether, and the same measurements were conducted.

The results of measurements are summarized in Table.

Table

| | Tensile strength (kp/mm²) | Elongation (%) | Tensile modulus (kp/mm²) | Flexural strength (kp/mm²) | Flexural modulus (kp/mm²) | Heat distortion temperature (°C) |
|---|---|---|---|---|---|---|
| Example | 49 | 3 | 840 | 46 | 1370 | 290 |
| Comparative example | 21 | 3 | 530 | 25 | 1000 | 300 |

As is apparent from the Example of this invention as described above, the laminated product of this invention has heat resistance comparable to that of the laminated product by use of the polyether ether ketone which has been known to be most excellent in heat resistance, and yet more excellent in mechanical strength than that product.

As described above, the laminated product of this invention is excellent in heat resistance, mechanical strength, solvent resistance, flame retardancy, moldability and therefore useful as the materials for electronic and electric instruments as well as mechanical parts.

**Claims**

1. A laminated product which comprises a layer of a polycyanoaryl ether having the number-average molecular weight of from 20,000 to 90,000 and containing 80 mole% or more of the recurring unit represented by the following formula (I):

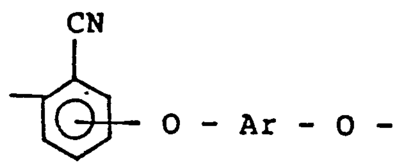

wherein Ar is

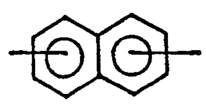,

and a layer of a fibrous reinforcing material laminated on one another, wherein said polycyanoaryl ether is contained in an amount of 20 to 85% by weight and said fibrous reinforcing material in an amount of 15 to 80% by weight, respectively.

2. The laminated product according to Claim 1, wherein said laminated product is a three-layer laminated product wherein the layer of said polycyanoaryl ether is laminated on the surface and the back of the inner layer comprising said fibrous reinforcing material.

**Patentansprüche**

1. Laminiertes Produkt, dadurch gekennzeichnet, daß es eine Schicht eines Polycyanoarylethers mit einem zahlenmittleren Molekulargewicht von 20.000 bis 90.000, der 80 mol-% oder mehr wiederkehrende Einheiten der folgenden Formel (I):

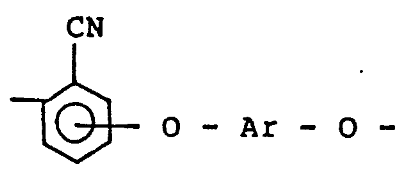

worin A für

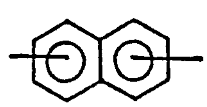

steht, enthält und eine aufeinander laminierte Schicht eines faserartigen Verstärkungsmaterials enthält, wobei der Polycyanoarylether in einer Menge von 20 bis 85 Gew.-% enthalten ist und das faserartige Verstärkungsmaterial in einer Menge von 15 bis 80 Gew.-% enthalten ist.

2. Laminiertes Produkt nach Anspruch 1, dadurch gekennzeichnet, daß das laminierte Produkt ein dreischichtiges laminiertes Produkt ist, bei dem die Schicht aus dem Polycyanoarylether auf die Oberfläche und die Rückseite der Innenschicht, die das genannte faserartige Verstärkungsmaterial umfaßt, laminiert ist.

**Revendications**

1. Produit laminé comprenant une couche d'un éther polycyanoarylique ayant un poids moléculaire moyen en nombre de 20.000 à 90.000 et contenant 80% en moles ou plus de l'unité récurrente représentée par le formule suivante (I):

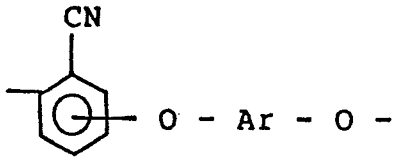

dans laquelle Ar est

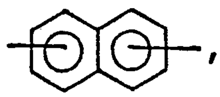

et une couche d'un matériau fibreux de renforcement laminée l'une sur l'autre, caractérisé en ce que cet éther polycyanoarylique est contenu en une quantité de 20 à 85% en poids et ce matériau fibreux de renforcement en une quantité de 15 à 80% en poids, respectivement.

2. Produit laminé suivant la revendication 1, caractérisé en ce que ce produit laminé est un produit feuilleté en trois couches dans lequel la couche de cet éther polycyanoarylique est laminée sur la surface et le dos de la couche intérieure comprenant ce matériau fibreux de renforcement.